# EUROPÄISCHE PATENTSCHRIFT

(11) **EP 3 038 975 B1**
(45) Veröffentlichungstag und Bekanntmachung des Hinweises auf die Patenterteilung: **02.10.2019**
(21) Anmeldenummer: 14772062.7
(22) Anmeldetag: 06.08.2014
(51) Int. Cl.: C01B 15/029, B01J 19/00

(54) **VERFAHREN UND VORRICHTUNG ZUR DURCHFÜHRUNG EINER REAKTION ZWISCHEN MINDESTENS ZWEI REAKTANDEN**
METHOD AND DEVICE FOR CARRYING OUT A REACTION BETWEEN AT LEAST TWO REACTANTS
PROCÉDÉ ET DISPOSITIF PERMETTANT DE METTRE EN UVRE UNE RÉACTION ENTRE AU MOINS DEUX RÉACTANTS

(30) Priorität: 15.08.2013 DE 102013108832
(43) Veröffentlichungstag der Anmeldung: 06.07.2016
(73) Patentinhaber: Karlsruher Institut für Technologie (KIT), 76131 Karlsruhe (DE)
(72) Erfinder: KRAUT, Manfred, 76351 Linkenheim-Hochstetten (DE); DITTMEYER, Roland, 76133 Karlsruhe (DE); VANKAYALA, Bhanu, 47226 Duisburg (DE)
(86) Internationale Anmeldenummer: PCT/EP2014/002156
(87) Internationale Veröffentlichungsnummer: WO 2015/022062

(56) Entgegenhaltungen:
- WO-A2-2005/105665
- DE-A1- 19 642 770
- DE-A1-102005 042 920
- US-A1- 2004 191 159

## Beschreibung

Die Erfindung betrifft ein Verfahren und Vorrichtung zur Durchführung einer Reaktion zwischen mindestens zwei Reaktanden gemäß dem ersten bzw. vierten Patentanspruch. Sie bezieht sich auf die eine kontinuierliche Synthese chemischer Grund- und Zwischenprodukte insbesondere der Direktsynthese von Wasserstoffperoxid H₂O₂ aus den gasförmigen Edukten Sauerstoff O₂ und Wasserstoff H₂, vorzugsweise mit Hilfe katalytischer Verfahren.

Bei zahlreichen chemischen Reaktionen, insbesondere bei exothermen Reaktionen wie z.B. einer Direktsynthese von Wasserstoffperoxid H₂O₂ aus den gasförmigen Edukten Sauerstoff O₂ und Wasserstoff H₂, treten grundsätzliche Probleme auf, die bei einer technischen Realisierung zu berücksichtigen sind oder diese einschränken. Insbesondere ist mit unerwünschten Nebenreaktionen zu rechnen, die durch ungünstige, insbesondere inhomogene, Konzentrationsverhältnisse der Edukte und Reaktionsprodukte im Reaktionsraum gefördert werden. Die genannten Inhomogenitäten begünstigen im Fall der H₂O₂-Direktsynthese die Bildung explosionsfähiger Gasgemische, die in einer Anlage zu gefährlichen Betriebszuständen führt. Ein weiteres Problem gründet in Stofftransportwiderständen in Strömungen, insbesondere wenn Gase in Flüssigkeiten dosiert werden sollen. Systembedingt nehmen die Einflüsse mit der Größe des jeweils zur Reaktion herangezogenen zusammenhängenden Reaktionsvolumens zu.

Ausgehend von derartigen Einschränkungen und Gefahren wird z.B. in **[1]** ein Reaktorsystem beschrieben, bei dem eine Vermischung und eine anschließende Reaktion in eine Vielzahl von parallel geschalteten Mikrovermischern bzw. Mikroreaktoren aufgeteilt wurden. Die Prozesse im Reaktorsystem sind somit in besser kontrollierbare kleinere Einheiten aufgeteilt, womit sich nicht nur eine Temperaturführung bei der Reaktion und die Parallelschaltung eine Erhöhung des erzielbaren Reaktionsumsatzes realisieren, sondern auch die Gefahr einer vorgenannten Bildung von Inhomogenitäten und explosionsfähigen Gasgemischen reduzieren lassen.

Ferner ist aus **[2]** ein Mikrostrukturreaktor beschrieben, bei dem zwei Edukte in parallel zueinander angeordneten Mikrokanalgruppen geleitet werden. Dabei wird ein Edukt über mehrere hintereinander angeordnete Überströmöffnungen örtlich und damit auch zeitlich versetzt in die in die Strömung des anderen Edukts eingeleitet, wobei es in der Strömung in den Mikrokanälen zu einer schrittweisen Reaktion zu einem Reaktionsproduktstrom kommt. Die Konzentration eines der beiden Reaktanden nimmt über die Länge des Reaktionsproduktstroms zu, während die des anderen Reaktanden abnimmt. Die örtlich und damit auch zeitlich versetzte Hinzudosierung eines Edukts in den-anderen Eduktstrom ermöglicht noch eine bessere Kontrollierbarkeit der Reaktion zwischen den beiden Edukten.

Eine besondere Herausforderung an die Versuchsführung stellt die Direktsynthese zur Herstellung von Wasserstoffperoxid aus den Edukten H₂ und 0₂.

In **[3]** wird beispielhaft eine solche Direktsynthese zur Herstellung von Wasserstoffperoxid offenbart, bei der die gasförmigen Edukte H₂ und O₂ mit einem Katalysatoren zu flüssigem H₂O₂ -umgesetzt werden. Die Reaktion wird stets in Gegenwart eines Lösungsmittels durchgeführt, in das mindestens ein Edelmetall, insbesondere Palladium als Katalysator suspendiert ist. Die Explosionsgefahr wird dadurch entschärft, dass die H2-Konzentration in der Gasphase auf maximal 5% begrenzt wird. Der beschriebene Reaktor umfasst ein Rieselbett, in welchem die Sättigung des dünnen Flüssigkeitsfilms über dem festen Katalysator dadurch erreicht wird, dass er im offenen Kontakt zur Gasphase steht.

Für die Direktsynthese von Wasserstoffperoxid wurden Membranreaktoren vorgeschlagen, die eine Eingabe der Edukte in die Reaktion verteilt und die Sicherheit und die Selektivität des Verfahrens erhöht.

So wird in **[4]** über den Einsatz dichter Membranschichten aus Palladiumlegierungen berichtet, durch die der für die Reaktion benötigte H₂ in eine mit Sauerstoff gesättigte Flüssigkeit eindosiert wurde. Die Reaktion erfolgte hier an der flüssigkeitsseitigen Oberfläche der Palladiummembran, auf die hierzu noch verschiedene Schichten aufgebracht wurden um die Selektivität der Reaktion zu erhöhen.

Ferner wird beispielhaft in **[5]** poröse Membranen, in die Palladium als Katalysator in Form metallischer Nanopartikel eingebracht wurden, für die Direktsynthese von H₂0₂ beschrieben. Bei diesem Konzept wird entweder H₂ oder 0₂ blasenfrei über eine poröse Membran in die mit dem jeweils anderen Edukt gesättigte Reaktionslösung eindosiert. Die Umsetzung erfolgt innerhalb der Deckschicht der porösen Membran, in der sich der Katalysator befindet.

Die in **[5]** beschriebene Variante, bei denen der Wasserstoff oder der Sauerstoff über rohrförmige Membranen entlang der Reaktionszone zudosiert wird, leiden an einem vergleichsweise hohen Stofftransportwiderstand (Stoffübergang Gas/Flüssigkeit und Diffusion in der flüssigen Phase) bedingt durch den relativ großen Innendurchmesser technisch üblicher Membranen. Ausserdem ist bei dem vorgeschlagenen Verfahren der erreichbare Umsatzgrad beim Durchgang durch den Reaktor durch die Gaslöslichkeit unter den Bedingungen im vorgeschalteten Sättiger limitiert, so dass bei vertretbaren Systemdrücken eine Rückführung benötigt wird, um in den Bereich technisch interessanter Konzentrationen von Wasserstoffperoxid (> 3 Gew.-%) zu gelangen. Hiermit ist zum einen ein relativ hoher technischer Aufwand verbunden. Zum anderen wird nur ein Teil des zudosierten Sauerstoffs umgesetzt. Der Rest geht bei der Entspannung vor der Rückführung der Flüssigphase in den Sättiger verloren oder müsste aus dem Gasstrom mit erheblichem Aufwand wiedergewonnen werden.

Auch **[6]** und **[7]** offenbaren katalytische Reaktoren für die Direktsynthese von Wasserstoffperoxidmit gestufter Zugabe von H₂ beanspruchen. Ziele dieser gestuften Zugabe sind die kontrollierte Einhaltung eines Konzentrationsverhältnis O₂/H₂ entlang des Reaktors in einem optimalen Bereich und gleichzeitig die Minimierung der Menge an nicht umgesetzten O₂, die aus der Reaktion wieder abgetrennt und rückgeführt werden muss. Bei einer stufenweisen Zugabe von H₂ jeweils vor einem Reaktorsegment einer Reaktorkaskade ergibt sich der Nachteil dass explosionsfähige Gasmischungen an den Zugabestellen und stromabwärts davon nicht ausgeschlossen werden können.

Ferner beschreiben **[8]** und **[9]** Reaktorkonzepte, die unterschiedliche Membranen zur verteilten Dosierung von zwei verschiedenen Edukten in Mikrokanäle nutzen, um deren Konzentrationsverhältnis entlang der Reaktorachse für die Umsetzung an einer katalytisch aktiven Oberfläche zu optimieren. Die verteilte Dosierung erfolgt für beide Edukte im gleichen Reaktorabschnitt über einander gegenüber liegende permeable Wände. Bei diesen Konzepten erfolgt jedoch keine Trennung der gasförmigen Edukte. Durch die Verwendung von Mikrostrukturen wird die Gefahr von Explosionen zwar herabgesetzt. Von einer inhärenten Sicherheit kann jedoch insbesondere bei den vergleichsweise hohen Systemdrucken für die Direktsynthese von Wasserstoffperoxid nicht ausgegangen werden.

Außerdem beschreibt **[11]** ein Verfahren und eine Vorrichtung zur Produktion von Wasserstoffperoxid, bei dem Wasserstoff und Sauerstoff versetzt an jeweils mehreren Einlässen in eine Reaktionszone eingebracht werden und das Reaktionsprodukt über einen Auslass ausgeführt wird. Im Zusammenhang mit der Reaktionszone werden stromabwärts zu den Einlässen zudem Temperierungsmittel zur Temperierung der Reaktion von Wasserstoffperoxid zugeführt.

Davon ausgehend liegt die **Aufgabe, der Erfindung** darin, ein Verfahren und eine Vorrichtung zur Durchführung einer Reaktion zwischen mindestens zwei Reaktanden insbesondere H₂ und O₂ in einer Reaktionszone zu einem Reaktionsprodukt insbesondere Wasserstoffperoxid H₂O₂ so zu gestalten, dass die vorgenannten Nachteile und Einschränkungen zumindest signifikant weiter reduziert werden. Insbesondere soll die Gefahr von ungewollten Nebenreaktionen reduziert und dabei die Reaktionsgeschwindigkeit erhöht werden.

Die Aufgabe wird durch ein Verfahren und eine Vorrichtung mit den Merkmalen der unabhängigen Ansprüche 1 bzw. 4 gelöst. Auf diese rückbezogene Unteransprüche geben vorteilhafte Ausgestaltungen wieder.

Zur Lösung der Aufgabe werden ein Verfahren und eine Vorrichtung zur Durchführung einer Reaktion zwischen mindestens zwei Reaktanden (Edukte) in mindestens einer Reaktionszone zu einem Reaktionsprodukt vorgeschlagen. Im Falle mehrerer Reaktionszonen sind diese vorzugsweise gleichartig und parallel zueinander verschaltet. Die Reaktion verläuft kontinuierlich in der Reaktionszone unter Ausbildung eines Reaktionsflusses hin zu mindestens einem, vorzugsweise genau einem Ausfluss für das Reaktionsprodukt. Eine Reaktionszone wird dabei durch einen Mikrokanal, vorzugsweise einem Mikrokanal mit maximalen Querschnittsabmessungen (Durchmesser, Kantenlänge etc.) unter 5 mm, vorzugsweise unter 1 mm gebildet, wobei mindestens ein offenes Kanalende als Ausfluss dient. Die Reaktionszone weist dabei an der Wandung des Kanals entlang des Reaktionsflusses alternierende Einlässe für die Reaktanden auf; die Reaktanden werden über durch die Einlässe über die Erstreckung der Reaktionszonein den Reaktionfluss eingebracht. Der Reaktionsfluss verläuft in der Reaktionszone vorzugsweise entlang einer Reaktorachse, die vorzugsweise die Querschnittsmittelpunkte der Reaktionszone miteinander verbindet.

Der Reaktionsfluss wird durch eine kontinuierlich strömende flüssige Reaktionslösung gebildet, d.h. er umfasst den Bereich der Reaktionszone, in dem eine Reaktion der mindestens zwei, vorzugsweise genau zwei Reaktanden oder eines Zwischenprodukts zum Reaktionsprodukt stattfindet. Ein Zwischenprodukt entsteht beispielsweise durch Reaktion von Reaktanden in der Reaktionszone als Vorstufe zu einem Reaktionsprodukt. Die Reaktanden sind entweder flüssig oder gasförmig. Ebenso sind die Reaktionsprodukte im Reaktionsfluss flüssig oder gasförmig.

Vorzugsweise ist in der Reaktionslösung, welche mit einem Reaktionspartner gesättigt sein kann, ein Katalysator als Partikel, Gas oder Flüssigkeit suspendiert oder gelöst. Neben ortsfesten Katalysatoren (Kanalwandbeschichtung, Mikrofestbett) kommen so auch durch das System transportierte suspendierte Katalysatorpartikel bzw. homogen gelöste Katalysatoren zum Einsatz, womit in vorteilhafter Weise eine Volumenpräsenz des Katalysators im gesamten Reaktionsfluss erzielt, wird. Als Katalysator kommen vor allem Edelmetalle, insbesondere Gold und Palladium, sowie Legierungen bieder auf verschiedenen Trägern zum Einsatz. Bevorzugt kommt Pd auf C, Pd auf Silikatträgern, bevorzugt auf zeolithischen Trägern, weiter bevorzugt auf Titansilikalit zum Einsatz.

Eine alternative Ausgestaltung sieht separate Einlässe für den Katalysator vor. Vorzugsweise erfolgt die Eingabe des Katalysators in Reaktionsflussrichtung vor der Eingabe zumindest des zuletzt eingegebenen Reaktanden, der an einer katalytischen Reaktion zum Reaktionsprodukt oder einem Reaktionzwischenprodukt beteiligt ist. Damit wird in vorteilhafter Weise sichergestellt, dass der in der Katalysator bereits beim Erstkontakt aller an einer Reaktion beteiligten Reaktanden untereinander, d.h. bereits unmittelbar am Einlass für den zuletzt eingegebenen Reaktanden in die Reaktion, im Reaktionsfluss bereits gelöst und/oder suspendiert d.h. gleichmäßig verteilt ist und dabei auf die Reaktion bereits unmittelbar einwirkt. Wesentlich ist eine in Reaktionsfluss gerichtete alternierende Einmischung der Reaktanden durch alternierendeEinlässe, womit über die gesamte Erstreckung des Reaktionsflusses eine kontinuierliche Reaktion aufrechterhalten wird. Damit einher geht eine alternierend verteilte Dosierung der mindestens zwei, bevorzugt genau zwei verschiedenen gasförmigen Reaktanden in konsekutiven Abschnitten eines kompakten mikrostrukturierten Apparates über poröse Membranen oder Mikrosiebe in den Reaktionsfluss. Im Ergebnis der vorgenannten wiederholten alternierenden verteilter Dosierung und Abreaktion wird ein Sägezahn-Profil der Konzentration der in der Flüssigphase in der Reaktionszone gelösten Reaktanden erreicht.

Die Einlässe werden durch Siebelemente oder Membranen gebildet, die ein unkontrolliertes Einfließen zugunsten einer Eindiffusion der Reaktanden verhindern. Damit wird insbesondere bei einer Zugabe von gasförmigen Reaktanden in eine flüssige Reaktion nicht nur eine Bildung von Gasanteilen in der Reaktion wirksam unterbunden, sondern auch der Zustrom an Reaktanden in vorteilhafter Weise durch die Aufnahmefähigkeit der Reaktion begrenzt. Die Stöchiometrie der angrenzenden Reaktion wird eingehalten.

Insbesondere sind bei einer Synthese von Wasserstoffperoxid H₂O₂ die beiden Reaktanden H₂ und O₂ vor einer Einmischung gasförmig, kommt an den Einlässe mit dem flüssigen Reaktionsprodukt in Kontakt und diffundiert spontan in dieses ein. Bei der H₂O₂-Synthese ist der Katalysator vorzugsweise in der Reaktionslösung suspendiert.

Speziell durch die alternierende Eingabe jeweils nur eines Reaktanden in vorgegebenen Abständen in Verbindung mit dem unmittelbar erfolgenden Verbrauch der Reaktanden im Reaktionsfluss entsteht bei kontinuierlichem Fortschreiten der Reaktion ein sägezahnartiges Konzentrationsprofil der noch nicht reagierten Reaktanden in einem besonders vorteilhaften engen Konzentrationsbereich entlang der Kanalachse, was eine stöchiometrische und damit optimale Reaktion begünstigt. Der Konzentrationsbereich erstreckt sich vorzugsweise um den Konzentrationswert um die Stöchiometrie und wird je nach Dosierung durch einen der Reaktanden unter- oder überschritten. Die Abstände zwischen zwei Einlässen, der jeweilige Volumenstrom an Reaktanden durch die Einlässe und des Reaktionsflusses sowie die Reaktionsgeschwindigkeit im Rektionsfluss beeinflussen das Konzentrationsprofil und damit die Breite des vorgenannten Konzentrationsbereichs.

Eine Eingabe eines der beiden Reaktanden erfolgt dabei an den Stellen im Reaktionsfluss, an denen das sägezahnartige Konzentrationsprofil dieses Reaktanden jeweils ein Minimum aufweist und dabei eine zyklisch wiederkehrende Unterkonzentration (Mangel) an diesem Reaktanden in der Reaktion auftritt. Eine Unterkonzentration gegenüber einer Reaktionsstöchiometrie bewirkt bei einer Eingabe des unterrepräsentierten Reaktanden in vorteilhafter Weise eine Reaktionsbeschleunigung, mit der Annäherung an das stöchiometrische Verhältnis. Da aber durch den Reaktionsfortschritt nun eine andere Komponente im Unterschuss vorliegt, muss diese wieder nachdosiert werden.

Besonders vorteilhaft ist eine alternierende Eindosierung von mindesten zwei Reaktanden an einer Wandung entlang des Reaktionsstroms einer Reaktionszone. Die Eindosierung und Sättigung der Reaktionslösung durch die Reaktanden erfolgt dabei über dieselbe Seite abwechselnd, so dass immer am Einlass (an der Membran oder am Siebelement) die sog. Henry-Konzentration (Partialdruck eines gasförmigen Reaktanden ist proportional zur Konzentration des Reaktanden in dem flüssigen Reaktionsprodukt) des sättigenden Gases erreicht wird und diese Konzentration als Nachlauf sich in den Reaktionsstrom hineinzieht. Die Reaktionsgeschwindigkeit hängt von den Reaktandenkonzentrationen ab, ist folglich mit der Einmischung unmittelbar an den Einlässen, d.h. vorzugsweise bei einer Sättigung am größten und nimmt mit der Reaktion ab. Die Eingabe eines Reaktanden wird bevorzugt immer dann umgeschaltet, wenn die Reaktionsgeschwindigkeit eine Untergrenze erreicht,hat, d.h. zu klein wird.

Durch die vorgenannten Maßnahmen erhöht sich die Selektivität für das Reaktionsprodukt wie z.B. Wasserstoffperoxid bei der Direktsynthese bei hohem Umsatzgrad. Ferner wird damit sowohl eine sichere Verfahrensführung als auch eine hohe Raum-Zeit-Ausbeute erreicht. Die hohe Raum-Zeit-Ausbeute begünstigt zudem eine kompakte Bauform, eine bevorzugte Verwendung von Mikrokanälen als Reaktionsvolumina eine Realisierung als modulare Anlagen.

Die Reaktionszone ist als Mikrokanal bzw. Vielzahl von Mikrokanälen ausgebildet. Die Stofftransportwiderstände im System werden abseits der Einlässe durch geringe laterale Abmessungen der Strömungskanäle in Verbindung mit einer hohen Wandfläche pro Flüssigkeitsvolumen (Mikrokanäle) gering gehalten. Letztere erlaubt eine effiziente Zuführung der Edukte auch in blasenfreier Form nach dem Prinzip eines Membrankontaktors.

Die Erfindung umfasst neben einer Vorrichtung und einem Verfahren zur Durchführung einer Reaktion zwischen mindestens zwei Reaktanden in einer Reaktionszone zu einem Reaktionsprodukt mit allen oder einem Teil der vorgenannten Merkmale auch eine Verwendung der Vorrichtung und des Verfahrens insbesondere zur Herstellung für Wasserstoffperoxid aus Wasserstoff und Sauerstoff.

Die Erfindung wird nachfolgend anhand von Ausführungsformen mit den folgenden Figuren näher erläutert. Es zeigen
**Fig. 1a** **bis c** prinzipielle Darstellungen von Ausführungsformen mit versetzt gegenüberliegenden Einlässen zur Durchführung einer Reaktion zwischen mindestens zwei Reaktanden in einer Reaktionszone zu einem Reaktionsprodukt als Folienstapel in Schnittansichten **(a, c)** und einer Schnittaufsicht **(b),**
**Fig.2a** **und b** mögliche Ausgestaltungen der Einlässe,
**Fig.3a** **bis d** prinzipielle Darstellungen von Ausführungsformen mit alternierend auf einer Seite zur Reaktionszone angeordneten Einlässen sowie
**Fig.4** eine Darstellung der Konzentrationen der Reaktionsprodukte A und B sowie der Reaktionsgeschwindigkeit über die Erstreckung der Reaktionszone entlang des Reaktionsflusses.

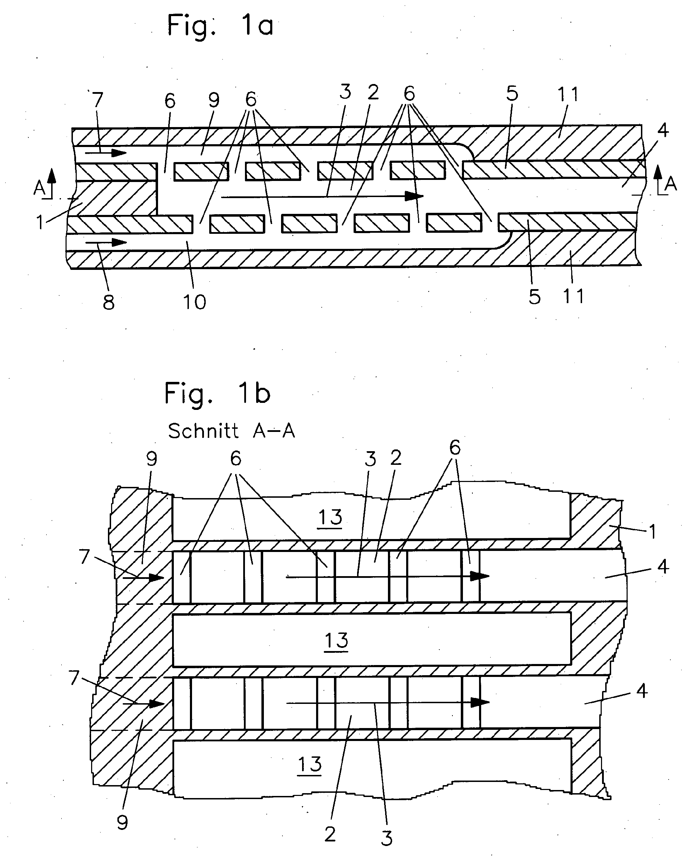

Die in **Fig.1a** **und b** dargestellte Ausführungsform der Vorrichtung zeigt beispielhaft einen Aufbau der Vorrichtung als Folienstapel, bei denen die Einlässe der beiden Reaktanden an gegenüberliegende Wandungen der Reaktionszone befinden. In einer ersten Folie **1** befindet sich in je einem Durchbruch die Reaktionszone **2,** in der jeweils mit einem Pfeil **3** die Richtung des Reaktionsflusses angegeben ist. Der Pfeil folgt dabei der Reaktionsachse der Reaktionszone (Symmetrieachse der Reaktionszone bezogen auf den Querschnitt der Reaktionszone). Die Reaktionszone ist in Richtung des Reaktionsproduktausfluss **4** hin offen. Die Reaktionszone grenzt - wie in **Fig.1a** dargestellt - beidseitig an Zwischenschichten **5** mit als Durchbrüche eingearbeitete Einlässe **6** für zwei Reaktandenflüsse **7** und **8** aus jeweils einen Verteilerkanal **9** bzw. **10.** Die Verteilerkanäle sind wiederum sind als Rillen in zweite Folien **11** eingearbeitet. Die ersten Folien **1** und/oder die Zwischenschichten **5** grenzen unmittelbar an die Reaktionszone an und sind vorzugsweise aus einem Katalysatormaterial gefertigt.

Die Folien weisen jeweils eine bevorzugte Stärke von 0,2 bis 3 mm, weiter bevorzugt zwischen 0,3 und 1,0 mm auf, weiterhin bevorzugt zwischen 0,4 und 0,8 mm auf. Da die Reaktionszone als Mikrokanal durch einen Durchbruch in der ersten Folie gebildet wird, entspricht die Foliendicke einer lateralen Querschnittsabmessung der Reaktionszone.

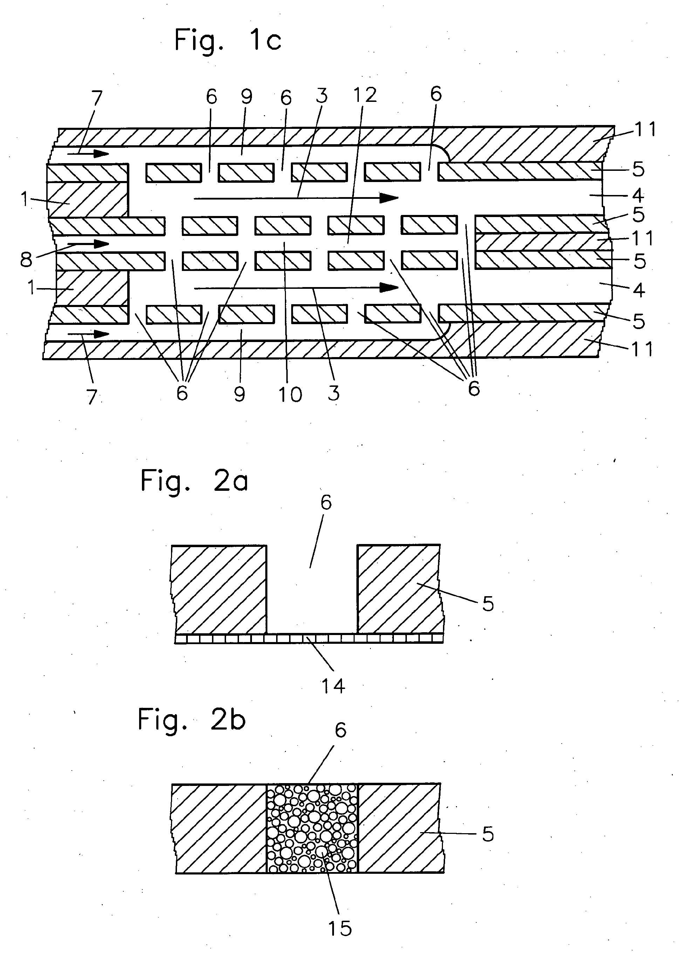

Die **Fig.1a** dargestellte Anordnung zeigt eine Reaktionsmodulebene mit einem Reaktionsvolumen und jeweils nur einem Verteilerkanal für die Reaktanden. Eine Ausgestaltung gem. **Fig.1c** sieht eine Integration mehrerer Reaktionsmodulebenen im vorgenannten Folienstapel vor. Vorzugsweise werden die Verteilerkanäle für die Reaktanden zwischen zwei Reaktionsvolumina **1** zu gemeinsamen Verteilerkanälen **12** zusammengefasst, aus denen die Einlässe beidseitig in je ein Reaktionsvolumen ausmünden.

**Fig.1b** zeigt Aufsichtschnittdarstellung A-A (vgl. **Fig.1a****)** in Höhe des Reaktionsvolumen **1.** Dabei sind mehrere des in **Fig.1a** dargestellten Reaktionsvolumens nebeneinander angeordnet, wobei zwischen diesen Fluidkanäle **13** für die Temperierung der Reaktionsflüsse vorgesehen sind. Ein Temperierfluid, vorzugsweise ein Kühlfluid durchdringt die in **Fig**. **1b** dargestellten Fluidkanäle vorzugsweise orthogonal zur Abbildungsebene, d.h. im Kreuzstrom zu den Reaktionsflüssen. Die Anordnung gem. **Fig. 1b** eignet sich grundsätzlich auch für mehrere Reaktionsmodulebenen, wie sie in **Fig.1c** wiedergegeben sind.

In einer nicht explizit dargestellten Ausgestaltung wird die erste Folie und eine Zwischenfolie zu einer gemeinsamen strukturierte Folie zusammengefasst.

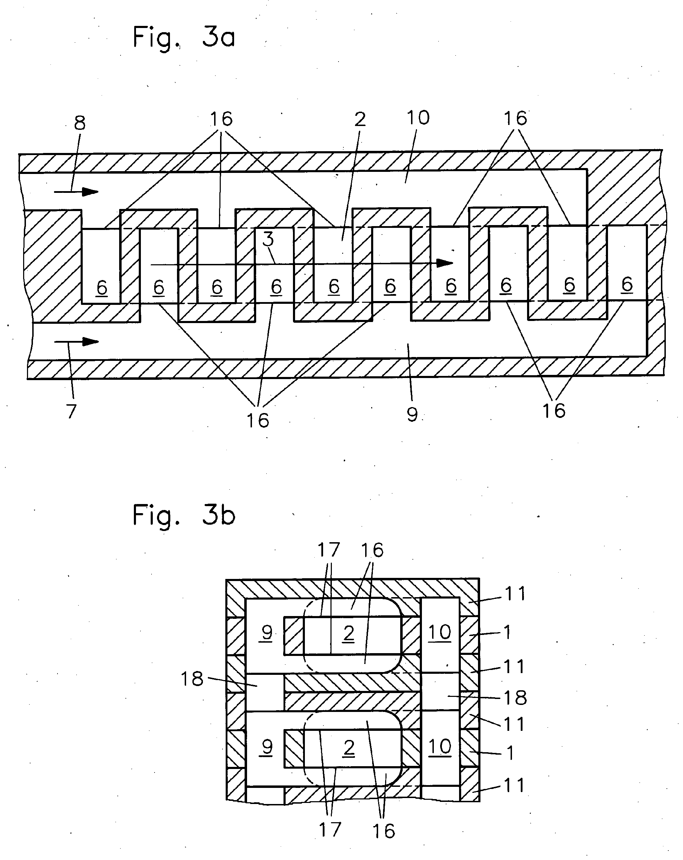

Die in **Fig.1a** dargestellten Durchbrüche in den Zwischenfolien sind offen, dabei aber mit einer Membran (vgl. **Fig.3b****)** oder einem Gitter **14** (vg1. **Fig.2a****),** alternativ einem offenporigen Element **15 (****Fig.2b****)** zur Vermeidung eines Refluxes von flüssigen Stoffen aus dem Reaktionsfluss in die Verteilerkanäle **9** und **10** für die bevorzugt gasförmigen Reaktanden überspannt. Die Gefahr eines Refluxes wird vorzugsweise durch eine vorhandene Oberflächenspannung zwischen gasförmiger und flüssiger Phase weiter reduziert. Wie in **Fig.2a** dargestellt, wird das Gitter **14** vorzugsweise flächig auf die Zwischenschicht **5** aufgebracht und mit einem Fügeverfahren (z.B. Diffusionsbonding) zu einem Bimaterial verbunden, bevor dieses in den Folienstapel, der die Vorrichtung umfasst, integriert wird. Die Ausgestaltung gemäß **Fig.2b** sieht dagegen durchgängig offenporige Elemente **15** in den Einlässen vor, die entweder als Elemente in die Durchbrüche der Zwischenschicht eingepresst werden oder als offenporige Bereiche Teile der Zwischenschicht sind. Membran, Gitter oder offenporige Elemente sind vorzugsweise aus einem Katalysatormaterial hergestellt.

**Fig.3a** **bis d** repräsentieren dagegen Ausführungen, bei denen die Einlässe für zwei Reaktanden seriell und alternierend an mindestens einer gemeinsamen Wandung der Reaktionszone angeordnet sind.

**Fig.3a** **und b** zeigen zwei prinzipielle Schnittansichten einer Ausführung mit einem zentralen repräsentieren eine Ausführung, bei dem die Verteilerkanäle **9** und **10** (für ersten bzw.zweiten Reaktandenfluss **7** bzw. **8**) beidseitig zur Reaktionszone **2** (befindet sich nicht in der Schnittebene und ist gestrichelt angedeutet) angeordnet sind. Von den Verteilerkanälen zweigen Verteilerfinger **16** ab, die sich über die Einlässe **6** über dem Reaktionsvolumen **1** erstrecken. **Fig.3b** zeigt in einem Querschnitt beispielhaft eine schichtweise Anordnung von zwei Reaktionszonen **2** in jeweils einer ersten Folie **1** sowie beidseitig zu diesen in jeweils einer zweiten Folie **11** angeordnete Verteilerfinger**16,** die jeweils in einen der beiden Verteilerkanäle **9** oder **10** ausmünden. **Fig.3b** zeigt die Schnittebene durch Verteilerfinger, die an den Verteilerkanal **9** angebunden sind, während die an den Verteilerkanal **10** angebundenen Verteilerfinger dahinter angeordnet gestrichelt angedeutet sind. Zwischen Reaktionszone und Verteilerfinger befinden sich die Einlässe, die mit einer Membran **17** vollständig abgedeckt sind und ein ungehindertes Einströmen von Gasbestandteilen der Reaktanden in den flüssigen Reaktionsfluss unterbinden oder zumindest behindern. Die Verteilerkanäle **9** und **10** erstrecken sich in **Fig.3b** über die erste und zweite Folie, wobei - wie beispielhaft dargestellt - bei einer Anordnung von mehreren Vorrichtungen mit je einer Reaktionszone übereinander die Verteilerkanäle je Reaktand über Übertrittsöffnungen **18** miteinander fluidisch korrespondieren.

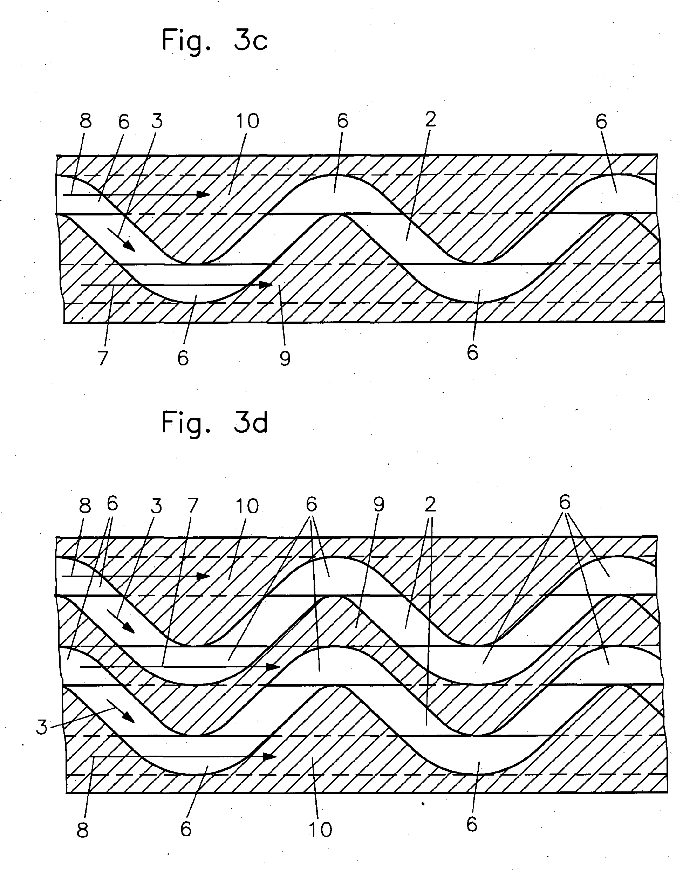

**Fig.3c** zeigt in einer Aufsicht-Schnittdarstellung eines Abschnitts einer Ausführung mit geradlinigen Verteilerkanälen **9** und **10** (für ersten bzw. zweiten Reaktandenfluss **7** bzw. **8**, befindet sich nicht in der Schnittebene und ist gestrichelt angedeutet), die sich über einer als schlangenförmig ausgeformten Reaktionszone **2** (in Schnittebene) erstrecken. Die Schnittbereiche zwischen Verteilerkanälen und Reaktionszone bilden die Einlässe **6**, mit einer zwischengeschalteten Gitter- oder Membranebene.

Die in **Fig.3c** dargestellte Ausführung der schlangenförmig ausgeformten Reaktionszone **2** lässt sich vorzugsweise im Folienstapel zur Erhöhung der Kapazität parallelschalten, und zwar horizontal und vertikal zu der Schnittebene oder Folienebene. **Fig.3d** zeigt eine entsprechende Ausgestaltung. **Fig.3d** offenbart dabei beispielhaft eine (horizontal) parallele Anordnung der schlangenförmig ausgeformten Reaktionszonen **2** in der Schnittebene nebeneinander. Alternativ wird eine nicht als Figur dargestellte Ausführung genannt, bei dem schlangenförmig ausgeformte Reaktionszonen beidseitig der Verteilerkanäle angeordnet sind, d.h. vertikal zu der Schnitt- und Folienebene parallel angeordnet sind. Beide Ausführungen zeigen zudem eine vorteilhafte Anordnung von versetzt an den Verteilerkanälen angeordneten Einlässen in die jeweilig, angrenzenden Reaktionszonen, d.h. die Einlässe eines Verteilerkanals, die als Reaktandensenken fungieren, münden nicht zugleich in zwei Richtungen, d.h. zwei Reaktionszonen ab.

Die in allen vorgenannten **Figuren** gezeigten Einlässe **6** sind beispielhaft nicht nur in einem gleichbleibenden Abstand zueinander, sondern auch für beide Reaktanden gleichgroß dargestellt. Sowohl der Abstand zueinander als auch die Querschnitte der Einlässe bestimmen sich jedoch durch die Reaktionskinetik in der Reaktionszone. Vorzugsweise wird bei einer Dimensionierung der vorgenannten geometrischen Abmessungen angestrebt, den sägezahnförmigen Konzentrationsverlauf so zu gestalten, dass sie Konzentrationen der Reaktanden in der Reaktionszone so schnell wie möglich einen vorteilhaften engen Konzentrationsbereich entlang der Kanalachse, der die stöchiometrische Reaktion repräsentiert, einnehmen.

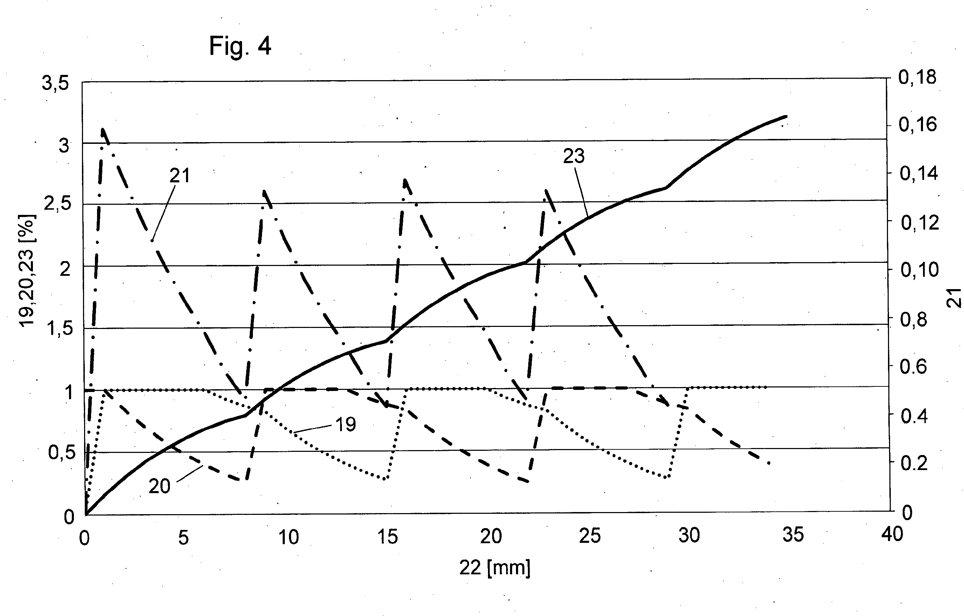

Mit dem alternierenden Einmischen der Reaktanden A und B in den Reaktionsstrom in der Reaktiönszone folgen - wie vorgenannt - die Konzentrationen der Reaktanden im Reaktionsstrom einem Sägzahnprofil. **Fig.4** offenbart diesen versetzten Verlauf der Konzentrationen für die Reaktanden A und B (**19** bzw. **20**) zusammen mit der Reaktionsgeschwindigkeit **21** sowie den Anteil des Reaktionsprodukt C (**23**) über die Erstreckung der Reaktionszone entlang des Reaktionsflusses, d.h. entlang der Reaktionsachse **22** in mm. Die Konzentrationen von A und B sind in % der jeweiligen Sättigungskonzentration im Reaktionsgemisch angegeben, während die Konzentration des Produkts C relativ zu Reaktant A angegeben wird (linke vertikale Achse des Diagramms), die Reaktionsgeschwindigkeit in mol/l·s (rechte vertikale Achse des Diagramms) wiedergegeben.

Im Folgenden werden folgend genannte Vorteile der Erfindung anhand einer beispielhaften Direktsynthese von H₂O₂ (Reaktionsprodukt C) aus den Reaktanden H₂ und O₂ (Reaktand A bzw. B) näher erläutert:
1. Vermeidung von unerwünschten Nebenreaktionen, die durch ungünstige Konzentrationsverhältnisse im Reaktionsraum gefördert werden:
   Bei der H₂O₂-Direktsynthese werden die gasförmigen Edukte H₂ und 0₂ an bevorzugt festen Katalysatoren zu flüssigem H₂0₂ umgesetzt. Die Reaktion wird in Gegenwart eines Lösungsmittels durchgeführt, vorzugsweise Methanol oder auch wässrige Systeme ggf. mit anderen Alkoholen und verschiedenen Zusätzen wie z.B. Bromid, welche die Selektivität erhöhen. Die Selektivitätsproblematik der Reaktion resultiert daraus, dass neben der erwünschten Bildung von H₂0₂ auf parallelem Weg auch das thermodynamisch begünstigte H₂0 gebildet wird. Außerdem wird H₂0₂ am Katalysator nicht nur gebildet sondern in Folgereaktionen auch aktiv zersetzt, wobei sowohl der reine Zerfall zu H₂ und ½ 0₂ als auch die Reduktion mit Wasserstoff beobachtet wird. Letztere ist vergleichsweise schnell und besitzt für die integrale Selektivität damit besondere Bedeutung. Die Geschwindigkeit der einzelnen Reaktionen ist in unterschiedlichem Maße von den Partialdrücken der Edukte H₂ und O₂ abhängig (verschiedene Teil-Reaktionsordnungen). Außerdem beeinflusst das Partialdruckverhältnis H₂/0₂ den Oxidationszustand der Katalysatoroberfläche und auch dadurch die Aktivität und die Selektivität. Daraus resultiert makroskopisch der Befund, dass Aktivität und Selektivität sehr von den Konzeritratiorien bzw. Partialdrücken von H₂ und 0₂ sowie dem Verhältnis der beiden Edukte im gesamten Reaktionsraum abhängig sind und eine Optimierung der Konzentrationsverhältnisse durch das angestrebte sägezahnförmige Konzentrationsprofil in vorgenannter Reaktionszone daher zu einer deutlichen Verbesserung der Selektivität und der Ausbeute und Reaktorleistung führt.
2. Vermeidung von gefährlichen Betriebszuständen durch Vorliegen oder Entstehung explosionsfähiger Gasgemische in bestimmten geometrischen Bereichen innerhalb der Anlage:
   Die Direktsynthese aus den Elementen gilt als ein attraktiver Weg zur Herstellung von H₂O₂. Dennoch erfolgte bislang keine technische Umsetzung im industriellen Maßstab, da Mischungen von H₂ und 0₂ praktisch im gesamten Bereich der Zusammensetzung explosionsfähig sind. Der explosionsfähige Bereich bei 1 bar liegt bei 4- 75 Vol.% H₂ in Luft und bei 4-94 Vol.% in 0₂ (vgl. z.B. **[10]).** Durch eine versetzte Eingabe der Reaktanden Sauerstoff und Wasserstoff in das Reaktionsgemisch treffen H₂ und O₂ signifikant seltener in ähnlicher Konzentration aufeinander. Es erfolgt eine bevorzugte Einbindung der Reaktanden in die stattfindende Synthese des Reaktionsprodukts H₂O₂, noch bevor die Reaktanden sich miteinander vermischen und explosionsfähige Gasgemische bilden können.
3. Reduzierung einer geringen Raum-Zeit-Ausbeute durch Stofftransportwiderstände, insbesondere in der flüssigen Phase, und ggf. am Übergang zu einem festen Katalysator sowie durch Konzentrationsabnahme entlang der Reaktorachse.

Das Produkt H₂O₂ ist unter den Reaktionsbedingungen der Direktsynthese flüssig und wird von einem Lösungsmittel aufgenommen. Üblicherweise werden alkoholische oder wässrige Lösungen eingesetzt. Aufgrund einer vergleichsweise geringen Gaslöslichkeit dieser Lösungsmittel und der geringen Diffusionskoeffizienten in der flüssigen Phase kommt es zu erheblichen Stofftransportwiderständen. Insbesondere am Übergang im Bereich der Einlässe der gasförmigen Reaktanden in die flüssige Phase der Reaktion, in der flüssigen Phase selbst, am Übergang von der flüssigen oder der gasförmigen Phase zu einem festen Katalysator und ggf. auch innerhalb des Katalysators (porös) treten diese Widerstände signifikant in Erscheinung. Ein in den Reaktanden, bevorzugt aber im flüssigen Reaktionsprodukt gelöster und/oder suspendierter Katalysator reduziert die erforderlichen Diffusionswege signifikant. Die Verwendung von Mikrokanälen erhöht die Raum-Zeit-Ausbeute durch den geringen Stofftransportwiderstand in der Grenzschicht, da das gesamte Kanalvolumen praktisch aus Grenzschicht besteht.

### Literatur:

[1] DE 10 2005 015 433 A1
[2] DE 100 44 526 A1
[3] DE 196 42 770 A1
[4] Choudhary et al.: Angew. Chem. Int. Ed.40 (2001) 1776-1779
[5] WO 2007/028375 A1
[6] US 7.067.103 B2
[7] US 7.105.143 B2
[8] Bortolotto et al.: Sep. Purif. Sci.73 (2010) 51
[9] Dittmeyer et al.: Appl. Catal. A: General 391 (2011) 311
[10] Pashkova et al.: Chem. Eng. J. 139 (2008) 165-171
[11] WO 2005/105 665 A2

### Bezugszeichenliste:

- 1: erste Folie
- 2: Reaktionszone
- 3: Pfeil (Reaktionsgemisch mit Flußrichtung)
- 4: Reaktionsproduktausfluss
- 5: Zwischenschicht
- 6: Einlass
- 7: Reaktandenfluss für ersten Reaktanden
- 8: Reaktandenfluss für zweiten Reaktanden
- 9: Verteilerkanal für ersten Reaktanden
- 10: Verteilerkanal für zweiten Reaktanden
- 11: zweite Folie
- 12: gemeinsamer Verteilerkanal
- 13: Fluidkanal
- 14: Gitter
- 15: durchgängig offenporiges Element
- 16: Verteilerfinger
- 17: Membran
- 18: Übertrittsöffnung
- 19: Konzentration Reaktand A
- 20: Konzentration Reaktand B
- 21: Reaktionsgeschwindigkeit
- 22: Reaktionsachse
- 23: Konzentration Reaktionsprodukt
- 24: Zweite Reaktionszone

## Patentansprüche

1. Verfahren zur Durchführung einer Reaktion zwischen mindestens zwei Reaktanden in einer flüssigen Reaktionslösung in mindestens einer Reaktionszone **(2)** zu einem Reaktionsprodukt, wobei
a) die Reaktion kontinuierlich je in einem Reaktionsfluss **(3)** pro Reaktionszone **(2)** entlang der Erstreckung der mindestens einen Reaktionszone **(2)** zu je mindestens einem Reaktionsproduktauslass **(4)** hin erfolgt, wobei die mindestens eine Reaktionszone als mindestens ein Mikrokanal ausgebildet ist,
b) die Reaktanden **(7, 8)** jeweils über die Erstreckung der mindestens einen Reaktionszone über Einlässe **(6)** in den Reaktionsfluss eingebracht werden sowie
c) das Reaktionsprodukt über den mindestens einen Reaktionsproduktauslass **(4)** abgeführt wird,
**dadurch gekennzeichnet, dass**
d) die Reaktanden **(7, 8)** jeweils gasförmig oder flüssig sind,
e) die Einlässe **(6)** durch Siebelemente **(14, 15)** oder Membranen **(17)** überspannt sind sowie
f) die Reaktanden seriell alternierend an jeweils mindestens zwei Einlässen **(6)** über die Erstreckung der mindestens einen Reaktionszone jeweils in den Reaktionsfluss bis zu einer Sättigung in der Reaktionslösung eingebracht werden, wobei im Reaktionsfluss ein sägezahnartiges Konzentrationsprofil der jeweiligen Reaktanden entsteht und die Einbringung an Stellen im Reaktionsfluss erfolgen, an denen das sägezahnartige Konzentrationsprofil jeweils ein Minimum aufweist.

2. Verfahren nach Anspruch 1, **dadurch gekennzeichnet, dass** zwei Reaktanden vorgesehen sind, wobei ein Reaktand Wasserstoff und ein Reaktand Sauerstoff ist sowie das Reaktionsprodukt Wasserstoffperoxid ist.

3. Verfahren nach einem der vorgenannten Ansprüche, **dadurch gekennzeichnet, dass** mindestens ein Katalysatormaterial in der flüssigen Reaktionslösung gelöst oder suspendiert ist.

4. Vorrichtung zur Durchführung einer kontinuierlichen Reaktion zwischen mindestens zwei Reaktanden **(7, 8)** in einer flüssigen Reaktionslösung in einem Reaktionsfluss zu einem Reaktionsprodukt, umfassend mindestens eine Reaktionzone **(2)** mit einem Reaktionsproduktauslass **(4)** zur Aufnahme des Reaktionsflusses **(3)** entlang einer Reaktorachse,
**dadurch gekennzeichnet, dass**
die Reaktanden **(7, 8)** jeweils gasförmig oder flüssig sind, die Einlässe **(6)** durch Siebelemente **(14, 15)** oder Membranen **(17)** überspannt sind sowie die mindestens eine Reaktionszone an mindestens einer Wandung entlang des Reaktionsflusses seriell zur Reaktorächse alternierende Einlässe **(6)** für die Reaktanden aufweist, wobei die mindestens eine Reaktionszone **(2)** durch mindestens einen Mikrokanal mit je mindestens einem offenen Ende als Reaktionsproduktauslass **(4)** gebildet wird.

5. Vorrichtung nach Anspruch 4, **dadurch gekennzeichnet, dass** je Reaktand jeweils mindestens ein Verteilerkanal vorgesehen ist, der in mehrere Einlässe ausmündet.

6. Vorrichtung nach einem der Ansprüche 4 oder 5, **dadurch gekennzeichnet, dass** die Siebelemente oder Membranen als ebene Schichten oder Folien in der Vorrichtung vorgesehen sind, die zumindest die Reaktionszone in ihrer Erstreckung vollständig überspannen.

7. Vorrichtung nach einem der Ansprüche 5 bis 6,**dadurch gekennzeichnet, dass** die Vorrichtung durch einen Folienstapel mit Einzelfolien **(1, 5,11)** gebildet wird, wobei die Reaktionszone und andere Fluidführungen für die Reaktanden durch Rillen und/oder Durchbrüche einzelner Folien gebildet werden.

## Claims

1. Method for carrying out a reaction between at least two reactants in a liquid solution in at least one reaction zone (2) to form a reaction product, **characterized in that**
a) **characterized in that** the reaction takes place continuously in each case in a reaction flow (3) per reaction zone (2) along the extent of the at least one reaction zone (2) to in each case at least one reaction product outlet (4), the at least one reaction zone being designed as at least one microchannel
b) the reactants are introduced into the reaction flow via inlets (6) in each case over the extent of the at least one reaction zone, and
c) the reaction product is discharged via the at least one reaction product outlet (4), **characterized in that** the
d) reactants (7,8) are each gaseous or liquid,
e) the inlets (6) are spanned by mesh elements or membranes (17) and
f) the reactants are introduced serially alternatingly (14, 15) at in each case at at least two inlets over the extent of the at least one reaction zone in each case into the reaction flow until saturation in the solution, a sawtooth-like concentration profile of the respective reactants being produced in the reaction flow and the introduction taking place at points in the reaction flow at which the sawtooth-like concentration profile in each case has a minimum.

2. Method according to claim 1, **characterized in that** two reactants are provided wherein one reactant is hydrogen and one reactant is oxygen and the reaction product is hydrogen peroxide.

3. Method according to one of the above claims, **characterized in that** at least one catalyst material is dissolved or suspended in the liquid solution.

4. Device for carrying out a continuous reaction between two reactants (7,8) in a liquid solution in a reaction flow to form a reaction product, comprising at least one reaction zone (2) with a reaction product outlet (4) for receiving the reaction flow (3) along a reactor axis
**characterized in that**
the reactants (7,8) are each gaseous or liquid, the inlets (6) are spanned by mesh elements (14,15) or membranes (17) and have at least one reaction zone on at least one wall along the reaction flow and in series with the reactor axis alternating inlets (6) for the reactants, wherein the at least one reaction zone (2) is formed by at least one microchannel each having at least one open end as reaction product outlet (4).

5. Device according to claim 4, **characterized in that** at least one distribution channel Is provided for each reactant, which opens out into a plurality of inlets.

6. Device according to one of claims 4 or 5, **characterized in that** the mesh elements and membranes are provided in the device as even layers or foils, which at least completely span the reaction zone in its extent.

7. Device according to one of claims 5 to 6, **characterized in that** the device is formed by a foil stack with individual foils (1, 5, 11), wherein the reaction zone and other fluid guides for the reactants are formed by grooves and/or openings of individual foils.

## Revendications

1. Procédé permettant la mise en oeuvre d'une réaction entre au moins deux réactifs dans une solution réactionnelle liquide dans au moins une zone de réaction (2) pour obtenir un produit de réaction, selon lequel :
a) la réaction s'effectue en continu, dans un flux réactionnel (3) pour chaque zone de réaction (2) le long de l'étendue de la zone de réaction (2) vers respectivement au moins une sortie de produit de réaction (4), la zone de réaction étant réalisée sous la forme d'au moins un micro-canal,
b) les réactifs (7, 8) sont respectivement introduits par des entrées (6) dans le flux réactionnel sur l'étendue de la zone de réaction, et
c) le produit de réaction est soutiré par au moins une sortie de produit de réaction (4),
**caractérisé en ce que**
d) les réactifs (7, 8) sont respectivement sous forme gazeuse ou liquide,
e) les entrées (6) sont recouvertes par des éléments de tamis (14, 15) ou des membranes (17),
f) les réactifs sont respectivement introduits en alternant en série dans le flux réactionnel par respectivement au moins deux entrées (6) sur l'étendue de la zone réactionnelle, jusqu'à leur saturation dans la solution réactionnelle, dans le flux réactionnel s'établissant un profil de concentration en forme de dents de scie des réactifs respectifs, et, l'introduction s'effectuant à des emplacements du flux réactionnel pour lesquels le profil de concentration en forme de dents de scie présente respectivement un minimum.

2. Procédé conforme à la revendication 1,
**caractérisé en ce qu'**
il est prévu deux réactifs, un réactif étant de l'hydrogène et un réactif étant de l'oxygène, et le produit de réaction est du peroxyde d'hydrogène.

3. Procédé conforme à l'une des revendications précédentes,
**caractérisé en ce qu'**
au moins un catalyseur est dissout ou mis en suspension dans la solution réactionnelle liquide.

4. Dispositif permettant la mise en oeuvre d'une réaction continue entre au moins deux réactifs (7, 8) dans une solution réactionnelle liquide, dans un flux réactionnel pour obtenir un produit de réaction, comprenant au moins une zone de réaction (2) ayant une sortie (4) du produit de réaction, permettant de recevoir le flux réactionnel (3) le long de l'axe d'un réacteur,
**caractérisé en ce que**
les réactifs (7, 8) sont respectivement sous forme gazeuse ou liquide, les entrées (6) sont recouvertes par des éléments de tamis (14, 15) ou des membranes (17), et la zone de réaction comporte, sur au moins une paroi, le long du flux réactionnel, les entrées (8) alternant en série sur l'axe du réacteur, pour les réactifs, la zone de réaction (2) étant formée par au moins un micro canal ayant au moins une extrémité ouverte constituant la sortie (4) du produit de réaction.

5. Dispositif conforme à la revendication 4,
**caractérisé en ce que**
pour chaque réactif il est respectivement prévu au moins un canal de distribution qui débouche dans plusieurs entrées.

6. Dispositif conforme à l'une des revendications 4 et 5,
**caractérisé en ce que**
les éléments de tamis ou les membranes sont prévus dans le dispositif sous la forme de couches ou de films plats, qui recouvrent totalement au moins la zone de réaction dans son étendue.

7. Dispositif conforme à l'une des revendications 5 et 6,
**caractérisé en ce qu'**
il est formé par un empilement de feuilles ayant des feuilles individuelles (1, 5, 11), la zone de réaction et d'autres guidages de fluide pour les réactifs étant formés par des rainures et/ou des ouvertures des feuilles individuelles.
